# EUROPEAN PATENT SPECIFICATION

(11) **EP 4 006 365 B1**
(45) Date of publication and mention of the grant of the patent: **19.02.2025**
(21) Application number: 21210130.7
(22) Date of filing: 24.11.2021
(51) Int. Cl.: F16B 33/02, F16B 39/30, F16B 39/284, F16B 33/04, B21H 3/04, B21H 3/08, B21K 1/30

(54) **A TORQUE TRANSMISSION ELEMENT WITH INTERNAL ROLLED THREAD, WITH FULL PROFILE**
EIN DREHMOMENTÜBERTRAGUNGSELEMENT MIT INNENGEROLLTEM GEWINDE, MIT VOLLEM PROFIL
UN ÉLÉMENT DE TRANSMISSION DE COUPLE À FILETAGE ROULÉ INTERNE, À PROFIL PLEIN

(30) Priority: 25.11.2020 IT 202000028292
(43) Date of publication of application: 01.06.2022
(73) Proprietor: A. AGRATI S.p.A., 20837 Veduggio con Colzano-Monza Brianza (IT)
(72) Inventor: Vercellone, Gianluca, 20837 Veduggio con Colzano MB (IT)
(74) Representative: Novagraaf Technologies

(56) References cited:
- EP-A1- 3 453 900
- WO-A1-2019/039627
- KR-B1- 101 583 479
- US-A- 2 787 796
- US-A- 4 782 688

## Description

### Field of the invention

The present invention relates to the field of threaded mechanical torque transmission elements.

More in detail, the invention relates to the formation by rolling of a thread of a mechanical torque transmission element such as, for example, a nut for a screw and nut pair.

### State of the art

The main known methods of making threaded mechanical torque transmission elements are milling, rolling and tapping.

On a workpiece, milling and tapping cause removal of part of the material, generally at the grooves of the thread to be formed. On the other hand, rolling is a deformation process that causes the material of the workpiece to be displaced in a direction of depression at the grooves and in direction of elevation at the crests of the thread to be formed.

Milling affords significantly more accurate results, with machining tolerances as little as less than one hundredth.

Tapping is an alternative process from low-quality removal of the contact and precision surfaces, with a cost impact that is halfway between rolling and milling.

Conversely, rolling is a significantly faster and more cost-effective process.

One of the problems of known rolling, which make it less preferable than milling or tapping in precision applications, is the formation of threads with double crests.

In detail, a torque transmission element, such as a nut, is rolled by means of a rolling tool known as "roll tap".

The rolling tool has its own thread which is designed to operate on the workpiece to deform its surface and obtain the desired thread thereon.

At least a first part of the rolling thread extends on a tapered surface of the rolling tool, often followed by a part of the thread on a cylindrical surface, to progressively press against the workpiece as the rolling tool moves forward with a helical motion. This will form a groove where the crests of the rolling thread contact the surface to be machined, the groove becoming deeper and wider as the rolling tool moves forward. In other words, the material of the workpiece is spread apart, and is depressed where it contacts the crest of the rolling thread and elevated between two successive crests of the rolling thread.

The depression of the workpiece material forms the grooves of the thread of the final resulting torque transmission element, whereas the elevation of the material forms the crests.

Nevertheless, material elevation is accentuated at the two sides of the rolling thread, i.e. the parts that connect each crest with the adjacent grooves.

However, elevation is less accentuated at the center of the grooves of the rolling thread.

Therefore, the thread resulting from known rolling processes does not have a compact crest like that of milled threads, e.g. trapezoidal threads, but a crest portion with a central sag on a centerline of the crest, all along the thread. Thus, the crest has two distinct top portions that are elevated with respect to the centerline, at both sides of the centerline.

WO2019039627 discloses a pair of fastening elements, such as a screw and a nut, which are adapted to provide a static connection, but are not suitable for dynamic torque transmission. In the screw, each turn of the thread is intentionally formed with a double crest using a special tool. Once the screw production process has been completed, the nut is tightened upon the screw, and presses the two crests against each other. This will cause them to be elastically deformed and constantly press against the thread of the nut, thereby ensuring a steady fastening effect.

### Problem of the prior art

This double crest with its sag constitutes a weakness point in the thread, which is deemed to be unacceptable in precision applications in which the torque transmission element is designed to be exposed to high stresses.

A further weakness point in the thread, common to both rolled and milled threads, is in the first and last turns, which have a reduced thickness and hence less resistance to axial stresses.

### Summary of the invention

The object of the invention is to obviate the above discussed prior art problems.

This and other objects, which will become apparent from the following detailed description, are fulfilled by a mechanical torque transmission element as defined in any of the appended claims.

### Benefits of the invention

The present invention can reduce the weakness points of the thread of a mechanical torque transmission element, while maintaining low manufacturing costs.

Namely, the present invention can provide threaded mechanical torque transmission elements, with the throughput and costs of rolling, but with significantly reduced technical drawbacks as compared to milled threads.

More in detail, the present invention can provide rolled torque transmission elements whose threads have no double crests.

According to the invention, during rolling, the two elevated portions of the crest portion are deformed so as to be elevated with respect to the centerline of the crest, and close up to mutual contact above the centerline.

This will advantageously provide a unitary crest. As a result of this process, a few elements will remain to distinguish a thread obtained with the inventive techniques from a thread obtained by milling. This will show that the mechanical performances of the thread of the invention are also comparable to that of the milled threads, despite the use of a fast and cost-effective rolling process.

The central sag of the crest found in the prior art is substantially eliminated, or at most a shallow material depression remains along the centerline, which is in any case much shallower than prior art sags.

A possible way to distinguish the thread of the invention from a milled thread is to cut the mechanical element to expose a section of the thread. In this section a physical interface surface may be recognized, i.e. a surface of discontinuity in the thread material, where the two elevated portions have contacted each other, above the centerline. On the contrary, in a milled thread, the thread material has no surface of discontinuity therein.

A channel may be also found below this interface surface, level with the original centerline of the crest portion. The channel and the interface surface represent the visible traces of the sag that is only temporarily formed during rolling before closing up.

In preferred embodiments, in addition to the elimination of the double crests, the weakened part of the first and/or last turns of the thread is also eliminated by milling.

Finally, a heat treatment in an oxide-free environment prevents undesired residues from building up in the thread grooves, which would expose the thread to wear after a small number of working cycles.

Further characteristics and advantages of the invention will be recognizable by a skilled person from the following detailed description of exemplary embodiments of the invention.

### BRIEF DESCRIPTION OF THE FIGURES

The accompanying figures show, by way of example and without limitation, examples that will be useful to understand some embodiments of the invention, and in particular:
- Figure 1 is a representative sectional view of a prior art mechanical element that has been threaded by rolling;
- Figure 2 is an enlarged view of a detail of Figure 1,
- Figure 3 is a sectional view of a mechanical element of the invention, when rolling has been completed,
- Figure 4 is an enlarged view of a detail of Figure 3,
- Figure 5 is a sectional view of a threaded mechanical element of the invention, after turning on end turns,
- Figure 6 is an enlarged view of a detail of Figure 5,
- Figure 7 is a sectional view of a detail of an alternative embodiment of the invention,
- Figures 8 and 9 are perspective views of threaded mechanical elements of the invention which have been cut or shown in partial section to expose the interior thereof,
- Figure 10 is an enlarged view of a detail of Figure 9.

### DETAILED DESCRIPTION

The figures show a mechanical torque transmission element, designated by numeral 1, such as a nut.

Without prejudice to the general scope of the invention, reference will be made hereinafter to a hollow torque transmission element, the thread being formed on the inner surface of the torque transmission element, for example to an internally threaded nut. In other embodiments (not shown), the thread might be formed on both inner and outer surfaces. In further, not claimed, embodiments (not shown) the torque transmission element may be solid, such as a screw, with the thread formed on the outer surface.

Torque transmission elements 1 intended for dynamic coupling are of particular interest herein, with complementary elements moving relative to each other, namely for the purpose of torque transmission, and not for static fastening, with the elements intended to remain stationary once fastened.

In light of the above, the torque transmission element 1 comprises a body, preferably formed of one piece, which has a through hole 2 in the embodiment of the figures. However, in other embodiments, the following may also apply to a blind hole.

The hole 2 extends along an axis of extension X-X which here coincides with a center axis.

The hole 2 has a circular cross-section, as taken on a sectional plane perpendicular to the center axis X-X. The hole 2 also has an inner surface 3, facing the center axis X-X.

A thread 4 is formed on a surface of the body which here is the inner surface 3 facing the center axis X-X.

The thread 4 extends helically and comprises a plurality of successive turns 5. The turns 5 also extend helically between two end turns 5a, 5b, i.e. the turns 5 that define the two ends of the thread 4.

The end turns 5a, 5b are spaced apart in the direction of the center axis X-X.

Each turn 5 comprises a crest portion 6.

The crest portion 6 projects to a given height from the inner surface 3 of the hole 2 in a radial direction Y-Y, i.e. toward the center axis X-X.

Each turn 5 covers a single turn of the helix, but is only ideally separated from the subsequent turns 5, with no physical discontinuity between their respective crests 6. However, with the exception of the contact point between successive turns 5, the pairs of successive turns 5 are spaced apart in the direction of the center axis X-X.

Then, the thread 4 defines respective groove portions 7, which are situated, in the direction of the center axis X-X, between the crest portions 6 of each pair of successive turns 5.

Each turn 5 of the thread 4 also has two flanks 8 which connect its crest portion 6 with the adjacent groove portions 7.

The thread 4 is of essentially trapezoidal type. This means that the crest portions 6 and the groove portions 7 are essentially perpendicular to the radial direction Y-Y, and that the flank 8 of each turn 5 converge toward the crest 6 portion of the turn 5.

In a perfectly trapezoidal thread 4, the crest portion 6 of each turn 5 is connected to the adjacent flanks 8 at respective convex corners, while each flank 8 is connected to the adjacent groove portion 7 at a respective concave corner.

In particular, an axial section of the turn 5 does not have curved portions, whereby in particular the flanks 8 are straight.

However, in the present invention, rounded connections, with no sharp corners, are also admitted between the crest portions 6, the flanks 8 and the groove portions 7.

More in detail, and according to the invention, the trapezoidal threads of interest are defined by ISO 2901:2016.

Here, as in other sections of the disclosure, reference is made to an axial section of the thread 4 or of the entire torque transmission element 1. An axial section refers to a section taken along a sectional plane that crosses the center axis X-X.

Therefore, here the section plane extends in the axial and radial directions X-X, Y-Y.

Various advantageous features that can be implemented in at least one turn 5 of the thread 4 will now be described. It shall be understood that these characteristics will not be necessarily reproduced in all the turns 5. For example, different characteristics may be implemented in the end turns 5a, 5b. In any case, the characteristics described for a single turn 5 can be deemed to apply to all or most of the turns 5.

The thread 4 is formed by a rolling process by means of a rolling tool, preferably only one rolling tool. Therefore, as discussed with reference to the prior art, the crest 6 of the turn 5 has two elevated portions 61. Each elevated portion 61 is adjacent to a respective flank 8 of the helix 5.

An ideal centerline 62 separates the two elevated portions 61. Each of the elevated portions 61 and the centerline 62, as well as the crest portion 6 and the flanks 8, extend along the entire circumferential length of the turn 5. The circumferential length is meant to be measured on the helical path of the turn 5, along the crest portion 6 of the turn 5, between the two opposite ends of the turn 5.

During the rolling process, the two elevated portions 61 are deformed so as to be elevated with respect to the center line 62. According to the invention, this deformation continues until the two elevated portions 61 close up to mutual contact above the center line 62.

It should be noted that the steps of elevation and closing up of the elevated portions 61 are carried out by the same rolling tool in a single rolling step. Between the steps of elevation and closing up the rolling element is not removed, for example for application of a separate rolling element.

The rolling tool is distinct from the torque transmission element complementary to the element 1 as described above. In particular, in the case of a nut, the rolling tool is distinct from the screw with which the nut will then be coupled.

The deformation of the two elevated portions 61, which will cause them to close up to mutual contact is a plastic deformation, and not an elastic deformation. In other words, this deformation causes the elevated portions 61 to remain in contact with each other even after removal of the rolling instrument, without creating forces that might spread the elevated portions 61 apart.

After contact, the crest portion 6 of the turn 5 has a contact surface 63 between the two elevated portions 61, i.e. a physical interface whereat the elevated portions 61 contact each other.

The contact surface 63 can be identified in axial section as a discontinuity in the thread material 4 which delimits the two elevated portions 61. Therefore, the contact surface 63 is not a mere ideal surface, but a material, physical surface.

More in detail, each elevated portion 61 is delimited toward the center axis X-X by a respective material surface 64, which extends between the flank 8, adjacent to the elevated portion 61, and the center line 62.

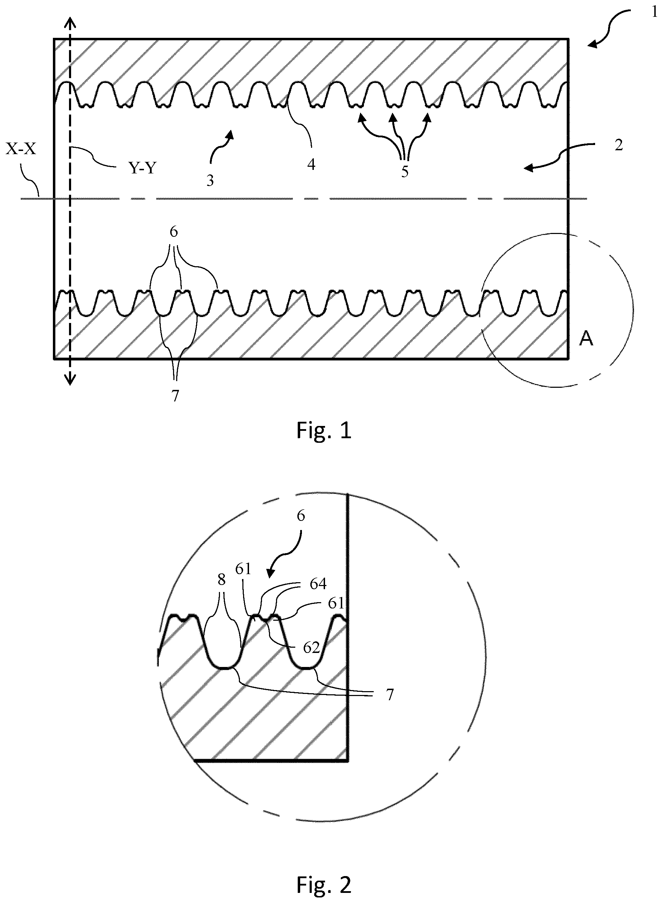

During a first step of the rolling process, as shown in Figures 1 and 2 (which are also representative of a rolled thread according to the prior art), before the elevated portions 61 contact each other, the material surfaces 64 of the two elevated portions 61 only contact each other at the center line 62.

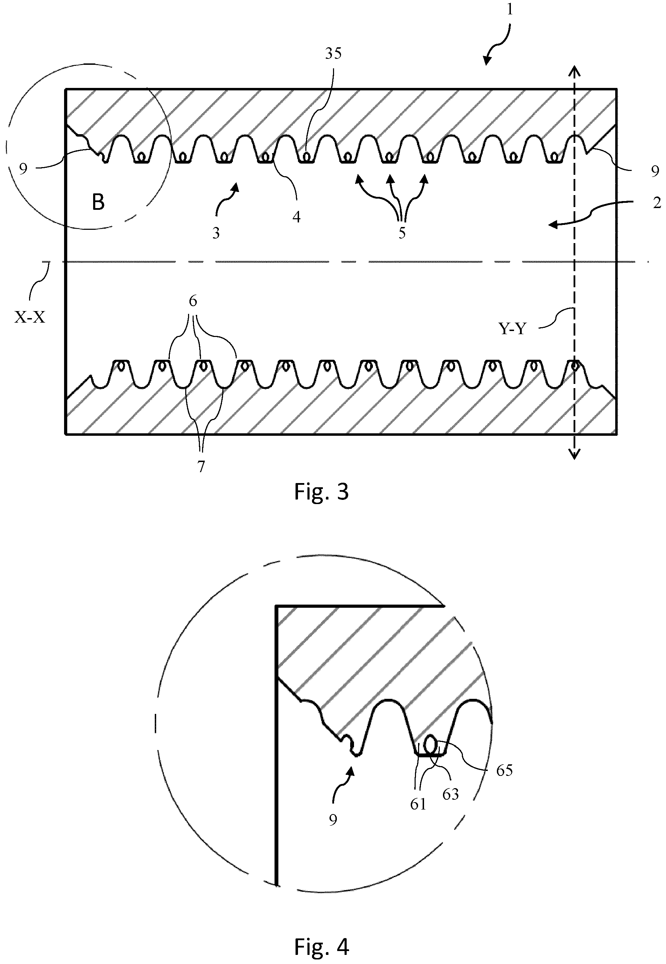

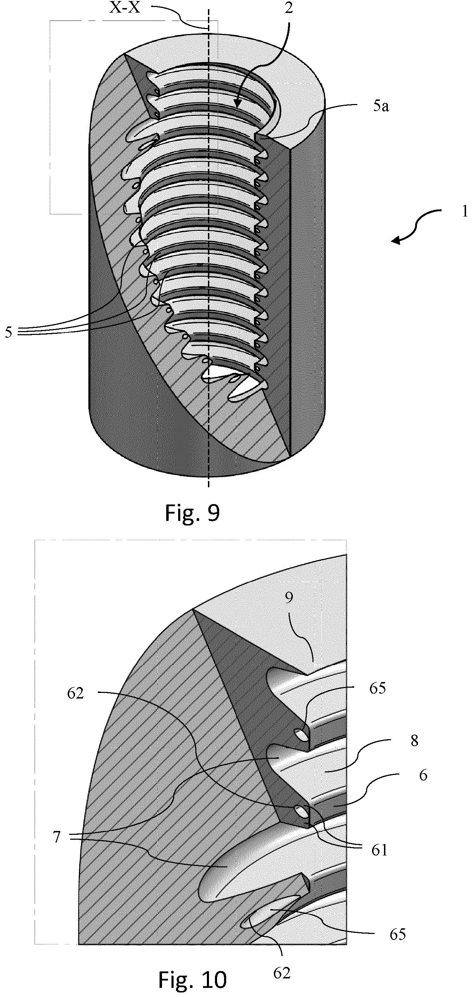

At the end of the rolling process, as shown in Figures 3-10, in the finished product, the two material surfaces 64 of the elevated portions 61 have respective contact portions 64a, which provide contact between the two separate elevated portions 61, at the contact surface 63.

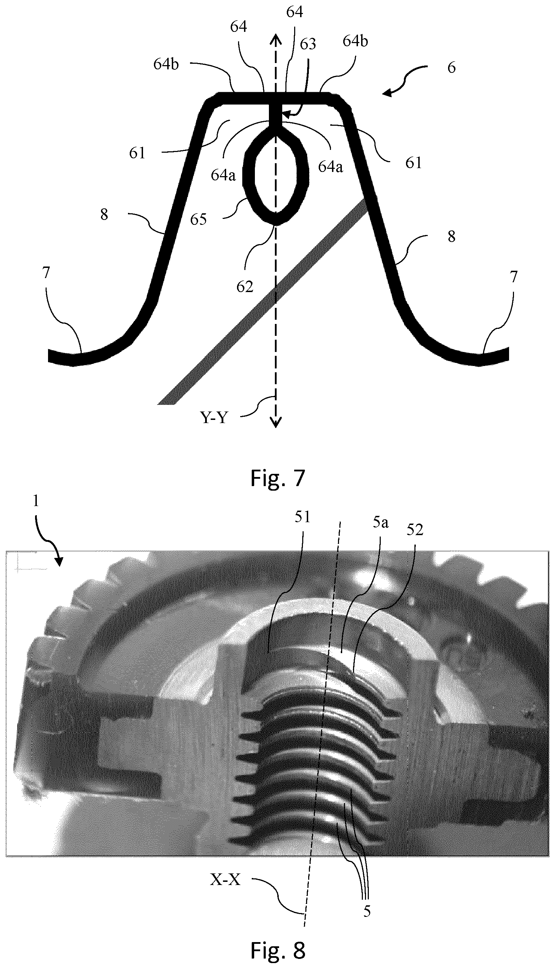

The details of the material surfaces 64 in the finished product may be particularly recognized in Figure 7, where a channel 65 (as discussed in greater detail below) is shown with a given depth specifically selected for clearer illustration of these details.

The material surface 64 of each elevated portion 61 also has a free portion 64b, which does not contact the other elevated portion 61. For each elevated portion 61, the contact portion 64a and the free portion 64b are adjacent to each other, with the contact portion 64a proximal to the centerline 62 and the free portion 64b proximal to the flank 8 of the turn 5.

In the finished product, the free portions 64b of the two elevated portions 61 are contiguous to each other, due to the contact between the contact portions 64a. The free portions 64b define together a single ideal crest surface essentially perpendicular to the radial direction Y-Y. This means that the resulting thread 4 has an essentially trapezoidal axial cross-section.

The ideal crest surface may not be perfectly planar, but may have, for example, a small hump at each elevated portion 61. However, this does not cause weaknesses, unlike the double crests of the prior art. A small sag may be present in the ideal crest surface between the two humps, whose depth is much less than the depth of the center line 62. For example, the ratio between the two depths may be less than 20%, preferably less than 10%.

Thus, the contact between the two elevated portions 61 takes place above the center line 62. Accordingly, the contact surface 63 is above the center line 62, i.e. closer to the center axis X-X.

In the illustrated embodiments, the crest portion 6 of the turn 5 has a channel 65 at the center line 62. Therefore, the channel 65, which is hollow, is below the contact surface 63. While in the embodiment of Figures 3-6 and 8-10 the channel 65 is shown to be almost tangent to the crest surface that defines the top of the profile of the thread 4, in Figure 7, as mentioned above, the channel 65 is shown at a greater depth.

The channel 65 represents a trace, as shown in axial section, confirming that the thread 4 has been obtained by rolling. It is a trace of the sag between the two elevated portions 61, which is only temporarily formed during rolling, and then substantially closes up by contact between the elevated portions 61.

This does not exclude embodiments in which no channel 65 is present at the end of rolling. Here, the contact surface extends deep from the ideal crest surface to the centerline 62.

Advantageous features of one or both of the end turns 5a, 5b will be now discussed, only one of which will be described for brevity.

The end turn 5a has a substantially constant thickness along its entire circumferential length, and has an essentially trapezoidal shape. Conversely, the threads 4 of the prior art generally have end turns 5a with a thickness increasing from the end of the thread 4, along the circumferential extent of the end turn 5a, toward the subsequent turn 5. The thickness is measured along the direction of the center axis X-X.

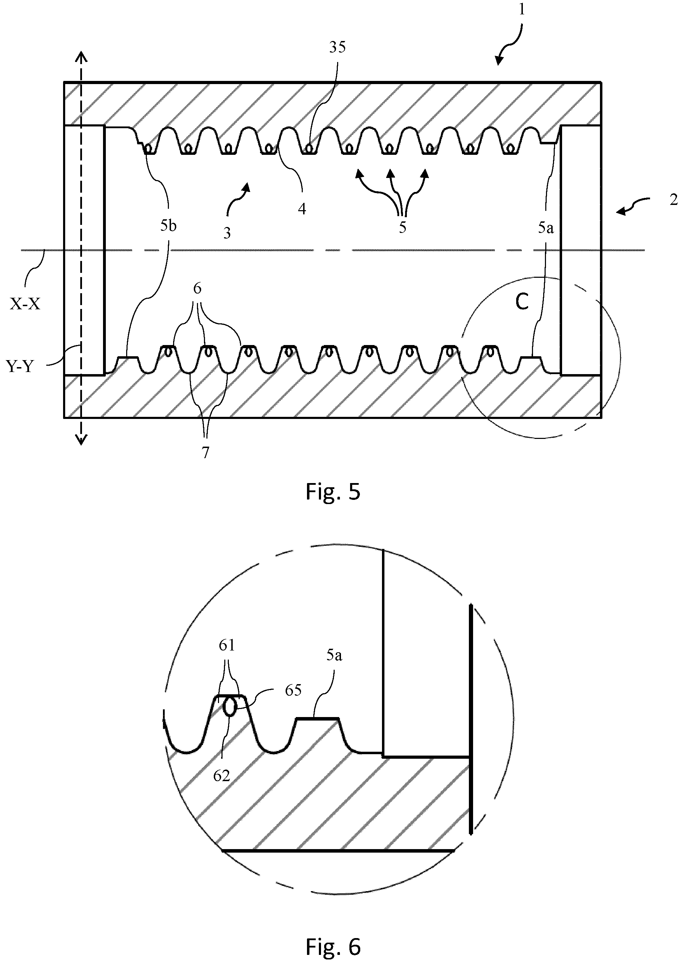

This is achieved by initially forming a thread 4 having a sacrificial end portion 9, and by removing the sacrificial end portion 9. Figures 3-4 and 8-9 show a condition in which the sacrificial end portion 9 has not been removed yet, whereas after removal the end turn 5a is as shown in Figures 5-6 and 8.

The sacrificial end portion 9 is that portion of thread 4 whose thickness increases from the end of the thread 4, along the circumferential extent of the sacrificial end portion.

The sacrificial end portion 9 is removed by machining, preferably by turning, hence by material removal. The removal causes the height of the thread 4 to be leveled, i.e. brought to the same height as the grooves 7, or even below, along the entire circumferential extent of the sacrificial end portion 9.

It should be noted that the sacrificial end portion 9, before removal, is in a position of the thread 4 that is more external than the position of the end turn 5av in the finished product. In other words, before removal, the thread 4 comprises an lead-in turn subsequent to the sacrificial end portion 9. Upon removal, the lead-in turn becomes the end turn 5a.

Preferably, in addition to the sacrificial end portion 9, the crest portion 6 of the lead-in turn is also at least partially removed. In other words, the height of the lead-in turn is at least partially reduced to obtain the end turn 5a. This could remove the elevated portions 61 of the crest portion 6 on at least part of the end turn 5a, 5b.

As a result, in the preferred embodiments, at least one of the end turns 5a in the finished product has a height that increases from a minimum height point 51, defined by one end of the thread 4, to a maximum height point 52, where the end turn 5a connects to a subsequent turn. The thickness of the end turn 5a is constant in particular from the minimum height point 51 to the maximum height point 52.

The described configuration of the end turn 5a is free from the weakness features of the end turns 5a, 5b according to the prior art.

Embodiments of torque transmission elements 1 incorporating the characteristics and advantages as described for the end turn 5a are also to be understood as falling within the scope of the invention as described.

However, preferred embodiments include both these advantageous aspects, with the thread 4 being also thermally treated in an oxide-free environment. This prevents the build-up of oxides and of other powders in the grooves 7 of the thread 4, which are difficult to eliminate, such build-up leading to premature wear during the use of the torque transmission element 1.

A skilled person may obviously envisage a number of changes to the above discussed variants, without departure from the scope defined by the appended claims.

## Claims

1. A mechanical torque transmission element (1), comprising a body extending along an axis of extension (X-X), said body having:
- a through or blind hole (2) extending about said axis of extension (X-X),
- an inner surface (3) of the hole (2) facing said axis of extension (X-X);
- a trapezoidal thread (4) complying with ISO 2901:2016, formed on said surface (3), said thread (4) comprising a plurality of turns (5) which extend in a helical pattern between two end turns (5a, 5b), spaced apart from each other in the direction of the axis of extension (X-X),
- each turn (5) defines a crest portion (6) projecting toward the axis of extension (X-X), and
- said thread (4) defines respective groove portions (7) between the crest portions (6) of each pair of successive turns (5), wherein
- at the crest portion (6) of at least one turn (5), two elevated portions (61) of the crest portion (6), separated by a centerline (62) of the crest portion (6) which extends all along the turn (5), are deformed so as to be elevated with respect to the centerline (62) and to close up by plastic deformation in mutual contact above the centerline (62).

2. A torque transmission element (1) as claimed in claim 1, wherein the crest portion (6) of said at least one turn (5) has a contact surface (63) above the centerline (62), which consists of a physical interface whereat the elevated portions (61) contact each other.

3. A torque transmission element (1) as claimed in claim 2, wherein the crest portion (6) of said at least one turn (5) has a channel (65) at the centerline (62), below the contact surface (63).

4. A torque transmission element (1) as claimed in any of claims 1 to 3, wherein each elevated portion (61) of the crest portion (6) of said at least one turn (5) is delimited by a material surface (64), which has a free portion (64b) and a contact portion (64a), the contact portions (64a) of the two elevated portions (61) contacting each other, the free portions (64b) of the two elevated portions (61) being contiguous with each other.

5. A torque transmission element (1) as claimed in any of claims 1 to 4, wherein at least one of the end turns (5a, 5b) has a height that increases, as measured in a radial direction (Y-Y) toward the axis of extension (X-X), from a minimum height point (51), defined by one end of the thread (4), to a maximum height point (52), where the end turn (5a, 5b) connects to a subsequent turn (5).

6. A torque transmission element (1) as claimed in claim 5, wherein the thickness of said end turn (5a, 5b), as measured in the direction of the axis of extension (X-X), is substantially constant from said minimum height point (51) to said maximum height point (52).

7. A torque transmission element (1) as claimed in claim 5 or 6, wherein said end turn (5a, 5b) is obtainable by a machining process, with material removal, subsequent to said rolling process.

8. A torque transmission element (1) as claimed in any of claims 1 to 7, wherein the thread (4) is thermally treated in an oxide-free environment.

## Patentansprüche

1. Mechanisches Drehmomentübertragungselement (1), das einen Körper umfasst, der sich entlang einer Erstreckungsachse (X-X) erstreckt, wobei der Körper aufweist:
- ein Durchgangs- oder Sackloch (2), das um die Erstreckungsachse (X-X) verläuft,
- eine Innenoberfläche (3) des Lochs (2), die der Erstreckungsachse (X-X) zugewandt ist,
- ein Trapezgewinde (4) gemäß ISO 2901:2016, das auf der Oberfläche (3) ausgebildet ist, wobei das Gewinde (4) eine Vielzahl von Windungen (5) umfasst, die in einem spiralförmigen Muster zwischen zwei Endwindungen (5a, 5b) verlaufen, die in Richtung der Erstreckungsachse (X-X) voneinander beabstandet sind,
- wobei jede Windung (5) einen in Richtung der Erstreckungsachse (X-X) vorspringenden Scheitelabschnitt (6) aufweist, und
- das Gewinde (4) jeweilige Nutabschnitte (7) zwischen den Scheitelabschnitten (6) jedes Paars aufeinanderfolgender Windungen (5) definiert,
wobei
- am Scheitelabschnitt (6) von mindestens einer Windung (5) zwei erhöhte Abschnitte (61) des Scheitelabschnitts (6), die durch eine Mittellinie (62) des Scheitelabschnitts (6) getrennt sind, die sich über die gesamte Windung (5) erstreckt, so verformt sind, dass sie in Bezug auf die Mittellinie (62) erhöht sind und sich durch plastische Verformung in gegenseitigem Kontakt oberhalb der Mittellinie (62) schließen.

2. Drehmomentübertragungselement (1) nach Anspruch 1, wobei der Scheitelabschnitt (6) der mindestens einen Windung (5) eine Kontaktfläche (63) oberhalb der Mittellinie (62) aufweist, die aus einer physischen Schnittstelle besteht, an der die erhöhten Abschnitte (61) einander berühren.

3. Drehmomentübertragungselement (1) nach Anspruch 2, wobei der Scheitelabschnitt (6) der mindestens einen Windung (5) an der Mittellinie (62) unterhalb der Kontaktfläche (63) einen Kanal (65) aufweist.

4. Drehmomentübertragungselement (1) nach einem der Ansprüche 1 bis 3, wobei jeder erhöhte Abschnitt (61) des Scheitelabschnitts (6) der mindestens einen Windung (5) durch eine Materialoberfläche (64) begrenzt ist, die einen freien Abschnitt (64b) und einen Kontaktabschnitt (64a) aufweist, wobei die Kontaktabschnitte (64a) der zwei erhöhten Abschnitte (61) einander berühren und die freien Abschnitte (64b) der zwei erhöhten Abschnitte (61) aneinander angrenzen.

5. Drehmomentübertragungselement (1) nach einem der Ansprüche 1 bis 4, wobei mindestens eine der Endwindungen (5a, 5b) eine Höhe aufweist, die, gemessen in radialer Richtung (Y-Y) in Richtung der Erstreckungsachse (X-X), von einem Punkt minimaler Höhe (51), der durch ein Ende des Gewindes (4) definiert ist, zu einem Punkt maximaler Höhe (52) zunimmt, wo die Endwindung (5a, 5b) mit einer nachfolgenden Windung (5) verbunden ist.

6. Drehmomentübertragungselement (1) nach Anspruch 5, wobei die Dicke der Endwindung (5a, 5b), gemessen in Richtung der Erstreckungsachse (X-X), vom Punkt minimaler Höhe (51) bis zum Punkt maximaler Höhe (52) im Wesentlichen konstant ist.

7. Drehmomentübertragungselement (1) nach Anspruch 5 oder 6, wobei die Endwindung (5a, 5b) durch einen Bearbeitungsvorgang mit Materialabtrag im Anschluss an den Walzvorgang erhältlich ist.

8. Drehmomentübertragungselement (1) nach einem der Ansprüche 1 bis 7, wobei das Gewinde (4) in einer oxidfreien Umgebung wärmebehandelt ist.

## Revendications

1. Élément de transmission de couple mécanique (1), comprenant un corps s'étendant le long d'un axe d'extension (X-X), ledit corps ayant :
- un trou (2) traversant ou borgne s'étendant autour dudit axe d'extension (X-X),
- une surface interne (3) du trou (2) orientée vers ledit axe d'extension (X-X) ;
- un filetage trapézoïdal (4) conforme à la norme ISO 2901:2016, formé sur ladite surface (3), ledit filetage (4) comprenant une pluralité de spires (5) qui s'étendent selon un motif hélicoïdal entre deux spires d'extrémité (5a, 5b), espacées l'une de l'autre dans la direction de l'axe d'extension (X-X),
- chaque spire (5) définit une partie crête (6) faisant saillie vers l'axe d'extension (X-X), et
- ledit filetage (4) définit des parties rainure (7) respectives entre les parties crête (6) de chaque paire de spires (5) successives,
dans lequel
- au niveau de la partie crête (6) d'au moins une spire (5), deux parties surélevées (61) de la partie crête (6), séparées par une ligne centrale (62) de la partie crête (6) qui s'étend tout au long de la spire (5), sont déformées de manière à être surélevées par rapport à la ligne centrale (62) et à se refermer par déformation plastique en contact mutuel au-dessus de la ligne centrale (62).

2. Élément de transmission de couple (1) selon la revendication 1, dans lequel la partie crête (6) de ladite au moins une spire (5) a une surface de contact (63) au-dessus de la ligne centrale (62), qui consiste en une interface physique au niveau de laquelle les parties surélevées (61) entrent en contact l'une avec l'autre.

3. Élément de transmission de couple (1) selon la revendication 2, dans lequel la partie crête (6) de ladite au moins une spire (5) a un canal (65) au niveau de la ligne central (62), sous la surface de contact (63).

4. Élément de transmission de couple (1) selon l'une quelconque des revendications 1 à 3, dans lequel chaque partie surélevée (61) de la partie crête (6) de ladite au moins une spire (5) est délimitée par une surface de matériau (64), qui a une partie libre (64b) et une partie de contact (64a), les parties de contact (64a) des deux parties surélevées (61) étant en contact l'une avec l'autre, les parties libres (64b) des deux parties surélevées (61) étant contiguës l'une à l'autre.

5. Élément de transmission de couple (1) selon l'une quelconque des revendications 1 à 4, dans lequel au moins l'une parmi les spires d'extrémité (5a, 5b) a une hauteur qui augmente, telle que mesurée dans une direction radiale (Y-Y) vers l'axe d'extension (X-X), d'un point de hauteur minimum (51), défini par une extrémité du filetage (4), à un point de hauteur maximum (52), où la spire d'extrémité (5a, 5b) se relie à une autre extrémité (5).

6. Élément de transmission de couple (1) selon la revendication 5, dans lequel l'épaisseur de ladite spire d'extrémité (5a, 5b), telle que mesurée dans la direction de l'axe d'extension (X-X), est sensiblement constante dudit point de hauteur minimum (51) audit point de hauteur maximum (52).

7. Élément de transmission de couple (1) selon la revendication 5 ou 6, dans lequel ladite spire d'extrémité (5a, 5b) peut être obtenue par un processus d'usinage, avec retrait de matériau, après ledit processus de laminage.

8. Élément de transmission de couple (1) selon l'une quelconque des revendications 1 à 7, dans lequel le filetage (4) est traité thermiquement dans un environnement exempt d'oxyde.
